# FASCICULE DE BREVET EUROPEEN

(11) **EP 4 334 213 B1**
(45) Date de publication et mention de la délivrance du brevet: **19.02.2025**
(21) Numéro de dépôt: 22773272.4
(22) Date de dépôt: 23.08.2022
(51) Int. Cl.: B64G 1/42, B64G 1/40, H02G 3/04, H02G 3/32

(54) **ENGIN SPATIAL COMPRENANT UN DISPOSITIF ÉLECTRIQUE ET UN SYSTÈME D'ORIENTATION DUDIT DISPOSITIF ÉLECTRIQUE**
RAUMFAHRZEUG MIT EINER ELEKTRISCHEN VORRICHTUNG UND AUSRICHTUNGSSYSTEM FÜR DIE ELEKTRISCHE VORRICHTUNG
SPACECRAFT COMPRISING AN ELECTRICAL DEVICE AND AN ORIENTATION SYSTEM FOR SAID ELECTRICAL DEVICE

(30) Priorité: 26.08.2021 FR 2108922
(43) Date de publication de la demande: 13.03.2024
(73) Titulaire: Airbus Defence and Space SAS, 31402 Toulouse Cedex 4 (FR)
(72) Inventeur: DELTOUR, Bernard, 31402 Toulouse cedex 4 (FR); PUPILLE, Gilles, 31402 Toulouse cedex 4 (FR)
(74) Mandataire: Ipside
(86) Numéro de dépôt international: PCT/FR2022/051602
(87) Numéro de publication internationale: WO 2023/026011

(56) Documents cités:
- AT-A1- 512 487
- JP-A- 2004 096 983
- JP-A- 2012 081 528
- US-A- 4 465 253
- US-A1- 2016 200 456
- US-A1- 2019 210 744
- US-B1- 10 022 861

## Description

### Domaine technique

La présente invention concerne les systèmes spatiaux et en particulier l'aménagement des dispositifs alimentés en électricité tels que les moteurs ioniques sur des engins spatiaux.

### Etat de l'art

Dans le domaine spatial, certains dispositifs électriques, tels que les moteurs ioniques, nécessitent l'utilisation de câbles électriques de diamètre important pouvant supporter un fort ampérage et/ou un fort voltage. Il peut être nécessaire de pouvoir orienter certains dispositifs électriques, en particulier les moteurs ioniques pour le réglage de la direction de leur force de propulsion.

Une contrainte dans le domaine spatial est notamment que les parties constitutives d'un engin spatial doivent pouvoir résister à de fortes accélérations et vibrations pouvant apparaître aux phases de lancement ou de largage. De plus, dans le domaine spatial, les mouvements relatifs des parties constitutives d'un engin spatial doivent généralement permettre une répétitivité sur une durée de plusieurs années, sans qu'il ne soit possible d'effectuer des opérations de maintenance. Les systèmes spatiaux doivent ainsi présenter un haut niveau de fiabilité et de robustesse.

On connaît le document US 6,025,815 intitulé « *drive unit for adjusting satellite components requiring orientation* » qui enseigne un système d'orientation grâce à des actionneurs linéaires agencés en parallèle et à des bielles.

US 2016/200456 et AT512487 divulguent d'autres systèmes d'orientation. Le document US 2016/200456 divulgue, selon l'abrégé, un châssis, une partie mobile et deux axes de rotation ayant un point d'intersection.

### Présentation de l'invention

La présente invention vise à fournir un engin spatial équipé d'un dispositif électrique, tel qu'un moteur ionique, dont l'orientation est ajustée au moyen d'un système d'orientation amélioré.

Pour ce faire, l'invention propose un engin spatial selon la revendication 1.

L'invention propose donc un engin spatial doté d'un système d'orientation dont l'architecture combine deux moteurs rotatifs (ou plus), montés en série par l'intermédiaire d'une pièce de jonction, et au moins une fourche de guidage extérieure à la pièce de jonction.

Le guidage des câbles électriques du dispositif à orienter par la ou les fourches de guidages permet de maintenir les câbles du dispositif électrique dans un espace restreint (le chemin de guidage), afin d'éviter que ceux-ci n'entrent en contact avec d'autres équipements de l'engin spatial agencés à proximité. Ce confinement (maintien dans un espace restreint) des câbles est en particulier très utile lors des phases de lancement et de largage de l'engin spatial, durant lesquelles les câbles du dispositif électrique subissent de fortes vibrations pouvant aller jusqu'à provoquer la rupture d'un câble ou endommager les équipements alentour. Cet aménagement des câbles selon l'invention rend le système résistant à des vibrations et efforts de poussée importants.

Du fait de leur raideur (en particulier dans le cas de câbles de gros diamètre), les câbles exercent des couples résistifs sur les actionneurs rotatifs. S'il est utile durant les phases de lancement et de largage, le confinement des câbles pourrait au contraire être considéré comme négatif durant des phases de fonctionnement (lorsque les actionneurs sont activés) en ce qu'il risque d'amplifier les couples qu'exercent les câbles sur les actionneurs rotatifs. L'utilisation de fourches de guidage selon l'invention permet de pallier cet inconvénient d'une part en supportant les câbles, en maîtrisant leur position et leur courbure, et d'autre part en limitant les contraintes et notamment les efforts de frottement subis par les câbles ou les couples exercés par les câbles. De plus, les câbles s'étendant à l'extérieur de la pièce de jonction, les contraintes qu'ils subissent sont limitées ; il en va de même par conséquent des contraintes que ces câbles imposent aux actionneurs.

L'utilisation d'une ou plusieurs fourches de guidage selon l'invention permet ainsi de conserver des couples résistifs réduits exercés par les câbles sur les actionneurs rotatifs. La puissance nécessaire pour les actionneurs rotatifs est ainsi optimisée. Il en résulte un gain de masse et une économie énergétique significatifs. De surcroît, un haut niveau de fiabilité et de robustesse du système est obtenu, de sorte que de nombreux mouvements répétitifs peuvent être exécutés sans opération de maintenance.

Un autre avantage de l'invention est que le système d'orientation permet de faire varier à volonté la direction des axes du dispositif électrique et de placer le dispositif dans n'importe quelle position souhaitée. Il permet en effet de faire pivoter le dispositif autour de deux axes de rotation sur des angles importants, par exemple de +/- 25° (par rapport à une position initiale servant de référence), et même jusqu'à 180° dans les deux sens, l'amplitude angulaire maximale n'étant pas limitée par l'architecture du système d'orientation.

Le système d'orientation selon l'invention permet aussi de résoudre d'éventuels problèmes de conflits entre les câbles électriques du dispositif électrique et les équipements situés alentour et/ou de libérer des espaces pour l'aménagement d'autres équipements, en limitant le volume dans lequel lesdits câbles peuvent se mouvoir.

Selon une caractéristique possible de l'invention, la ou les fourches de guidage comprennent chacune une branche de fixation fixée à la pièce de jonction par une première extrémité ; par ailleurs, les doigts se présentent sous la forme de tiges, qui sont solidarisées, via une de leurs extrémités, à la seconde extrémité de ladite branche de fixation.

Selon une caractéristique possible de l'invention, les câbles électriques sont libres de glisser par rapport aux doigts de chaque fourche de guidage. En particulier, aucun organe de maintien limitant le déplacement des câbles selon la direction longitudinale desdits doigts n'est prévu. De même, les câbles sont avantageusement laissés libres de glisser relativement aux doigts à travers la fourche, selon la direction de cheminement desdits câbles. Cette caractéristique permet de minimiser les couples résistifs qu'exercent les câbles sur les actionneurs rotatifs.

Selon une caractéristique possible de l'invention, pour l'une ou chacune des fourches de guidage, les doigts de ladite fourche de guidage sont rectilignes et parallèles entre eux. En revanche, les doigts des fourches de guidage peuvent ne pas être parallèles d'une fourche à une autre. Par exemple, les doigts d'une première fourche s'étendent tous selon une première direction tandis que les doigts d'une deuxième fourche s'étendent tous selon une deuxième direction.

Selon une caractéristique possible de l'invention, pour l'une ou chacune des fourches de guidage, les doigts de ladite fourche de guidage sont coplanaires. De préférence, la branche de fixation de la fourche de guidage, s'étend également dans le même plan que les doigts. Tous les doigts de la fourche sont par exemple dans un plan transversal qui est orthogonal à la direction axiale de la pièce de jonction à l'endroit où le plan de la fourche coupe la pièce de jonction, c'est-à-dire au niveau de la première extrémité de la branche de fixation de la fourche de guidage. A noter que la direction axiale de la pièce de jonction peut ne pas être rectiligne : elle peut par exemple suivre une courbe qui part de l'axe de rotation de l'un des actionneurs en étant tangente à cet axe, et rejoint l'axe de rotation de l'autre actionneur, tangentiellement à celui-ci.

Selon une caractéristique possible de l'invention, pour chacune des fourches de guidage, les doigts de ladite fourche de guidage dépassent par rapport aux câbles de façon à interdire auxdits câbles de sortir de leur chemin de guidage. En d'autres termes, si l'on considère l'ensemble que forment les câbles reçus entre deux doigts consécutifs d'une fourche et que l'on nomme « largeur » la dimension que présente cet ensemble de câbles selon la direction longitudinale des doigts de la fourche, la longueur des doigts est supérieure à la largeur de l'ensemble de câbles, avec une marge suffisante pour que, quelles que soient les positions des actionneurs rotatifs, tous les câbles restent positionnés entre les doigts de la fourche même si les câbles sont laissés libre de glisser par rapport aux doigts.

Selon l'invention, les axes de rotation des actionneurs rotatifs sont séquents ; ils se coupent en un point dit centre d'intersection. Cette architecture présente l'avantage de la compacité.

Selon l'invention, au moins l'une ou chacune des fourches de guidage présente un axe principal qui passe par le centre d'intersection des axes de rotation des actionneurs rotatifs. A l'utilisation, sous l'effet de la rotation des actionneurs activés pour ajuster la position du dispositif électrique, les câbles électriques du dispositif qui s'étendent entre le bâti et ledit dispositif sont déplacés ; au fur et à mesure de la rotation des actionneurs, l'amplitude de déplacement des câbles décrit une sorte de vague. L'agencement de la ou des fourches de façon à ce que leur axe principal passe par le centre d'intersection des axes de rotation des actionneurs permet de minimiser la hauteur de cette vague. De plus un tel agencement permet de minimiser les mouvements des câbles transversalement aux doigts.

Selon une caractéristique possible de l'invention, la ou les fourches de guidage sont configurées pour recevoir au moins deux nappes superposées de câbles électriques, les câbles dans chacune des nappes étant disposés côte à côte. De préférence, lorsque les câbles sont ainsi organisés en deux nappes superposées, au moins l'une- ou de préférence chacune- des fourches comprend trois doigts, délimitant deux intervalles, chaque intervalle recevant l'une des deux nappes de câbles. Il n'est pas exclu de prévoir, en variante, que l'une (ou éventuellement plusieurs) des fourches ne comprenne que deux doigts, c'est-à-dire un seul intervalle recevant les deux nappes posées l'une sur l'autre. Le mode de réalisation utilisant des fourches à trois doigts est cependant préféré car la séparation des deux nappes dans deux intervalles distincts supprime les frottements entre les nappes au profit de frottements entre chaque nappe et les doigts qui l'entourent, lesquels frottements nappe contre doigts sont plus faciles à maîtriser (et donc à minimiser).

Selon une caractéristique possible de l'invention, dans un mode réalisation qui comprend plusieurs fourches de guidage, celles-ci sont régulièrement le long de la direction axiale des câbles, de façon à avoir, pour chaque câble, des tronçons de câble sensiblement de même longueur entre deux points de support.

Ceci permet de mieux répartir le poids des câbles sur la pièce de jonction et donc d'optimiser son design et son dimensionnement.

Plus particulièrement, si le système ne comprend qu'une seule fourche, il est souhaitable que ladite fourche soit située sensiblement au milieu des câbles, c'est-à-dire en moyenne sensiblement à égale distance des deux extrémités des câbles (bien entendu, selon les positions des actionneurs, le milieu des câbles peut passer d'un côté ou de l'autre de la fourche, c'est pourquoi on parle de « moyenne »).

Si le système comprend trois fourches ou plus, là encore, les fourches peuvent être agencées de façon à être régulièrement réparties sur toute la longueur des câbles. En variante, il peut être préféré que les fourches soient régulièrement réparties le long de la pièce de jonction, indépendamment des distances existant d'une part entre le dispositif électrique et la pièce de jonction et de d'autre part entre le bâti et la pièce de jonction. Dans cette variante, pour un même câble donné, les tronçons de câble situés entre deux fourches auront des longueurs similaires, mais on pourra avoir, du côté du dispositif électrique ou du côté du bâti, un premier tronçon de câble éventuellement plus grand ou plus petit que les tronçons de câbles entre deux fourches.

De façon usuelle, chaque actionneur rotatif comprend un rotor et un stator, et chaque actionneur dispose d'un harnais d'alimentation et de contrôle relié à son stator. Selon une caractéristique possible de l'invention, la pièce de jonction est fixée d'une part au stator de l'actionneur qui est relié au dispositif électrique (le rotor de cet actionneur étant relié au dispositif électrique) et d'autre part au rotor de l'actionneur rotatif qui est relié au bâti de l'engin spatial (cet actionneur étant par conséquent relié au bâti par son stator). Cette caractéristique permet avantageusement d'optimiser les positions des actionneurs par rapport à leur harnais d'alimentation. En effet, la rotation de l'actionneur qui est relié au bâti n'entraîne aucun effort sur le harnais d'alimentation et de contrôle dudit actionneur puisque ce harnais s'étend entre le bâti et le stator de l'actionneur et que ledit stator est directement fixé au bâti (le harnais s'étend donc entre deux pièces fixes). Le harnais d'alimentation et de contrôle de l'actionneur qui est relié au dispositif électrique s'étend entre le bâti de l'engin spatial et le stator dudit actionneur. Choisir de relier le stator de l'actionneur à la pièce de jonction (et le rotor de l'actionneur au dispositif électrique) permet de limiter le chemin parcouru et les efforts exercés par le harnais sur l'actionneur qui est disposé entre le dispositif électrique et la pièce de jonction.

Il est bien sûr possible d'agencer les actionneurs rotatifs différemment, c'est-à-dire par exemple de fixer chacun des deux actionneurs à la pièce de jonction par son stator, ou inversement par son rotor.

Dans une version possible de l'invention, le dispositif électrique à orienter (relativement au bâti de l'engin spatial) est un moteur ionique.

### Brève description des figures :

L'invention, selon un exemple de réalisation, sera bien comprise et ses avantages apparaîtront mieux à la lecture de la description détaillée qui suit, donnée à titre indicatif et nullement limitatif, en référence aux dessins annexés, dans lesquels :
[Fig.1] La figure 1 est une vue schématique en perspective d'un premier mode de réalisation d'un système d'orientation selon l'invention.
[Fig.2] La figure 2 est une vue schématique de profil d'un second de mode de réalisation d'un système d'orientation selon l'invention.
[Fig.3] La figure 3 est une vue schématique de dessus du second mode de réalisation de la figure 2.

Les éléments identiques représentés sur les figures précitées sont identifiés par des références numériques identiques.

### Description détaillée :

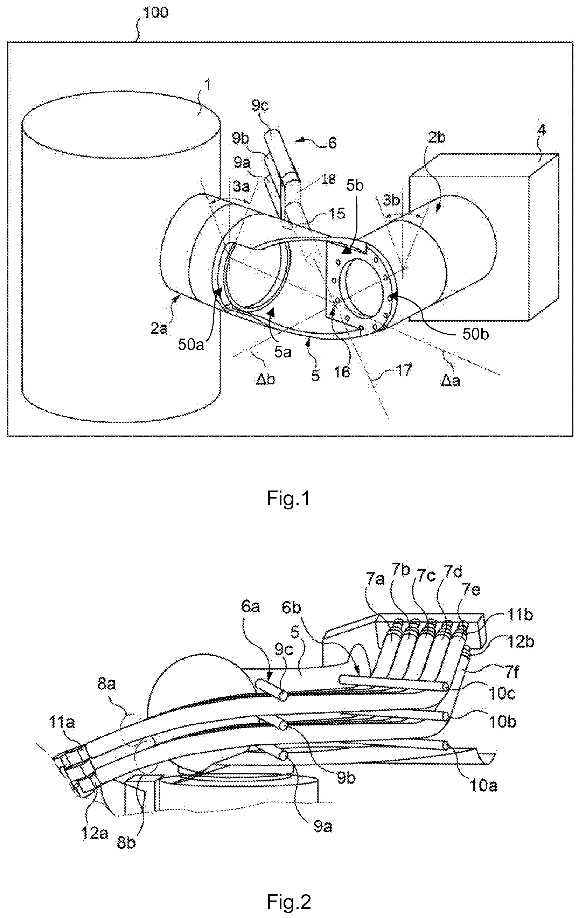

La figure 1 représente schématiquement un engin spatial 100 selon l'invention, comprenant un moteur ionique 1 mobile et un système d'orientation permettant d'orienter ledit moteur ionique selon deux axes Δa et Δb par rapport à un bâti 4 de l'engin spatial 100. Le moteur ionique peut être par exemple un moteur ionique à grilles ou un propulseur à effet Hall.

Le système d'orientation pourrait également s'appliquer à un autre dispositif électrique installé sur l'engin spatial, tel qu'un panneau solaire ou une antenne.

Le système d'orientation comprend deux actionneurs rotatifs 2a et 2b et une pièce de jonction 5 qui, dans le mode de réalisation de la figure 1, présente une forme de manchon biseauté. Chaque actionneur rotatif comprend un rotor et un stator. La pièce de jonction 5 présente deux interfaces pour sa liaison aux actionneurs rotatifs 2a, 2b, en l'occurrence deux ouvertures équipées chacune d'un rebord périphérique 50a, 50b, qui peuvent être circulaires comme illustré sur la fig.1. L'ouverture 50a reçoit de façon rigide le stator de l'actionneur rotatif 2a, tandis que l'ouverture 50b reçoit de façon rigide le rotor de l'actionneur rotatif 2b. Chaque rotor ou stator d'un actionneur rotatif est par exemple fixé sur le rebord périphérique de l'ouverture à laquelle il est associé.

Par ailleurs, le stator de l'actionneur rotatif 2a est relié de façon rigide au moteur ionique 1, tandis que le stator de l'actionneur rotatif 2b est relié de façon rigide au bâti 4 de l'engin spatial. Le moteur ionique 1 peut ainsi être orienté, par rapport au bâti de l'engin spatial, autour de deux axes de rotation Δa et Δb selon des débattements angulaires 3a et 3b.

Les moteurs des actionneurs rotatifs peuvent être par exemple des moteurs à courant continu, des moteurs à courant alternatif, des moteurs pas à pas, des moteurs avec ou sans balais. Les deux moteurs peuvent être du même type (par exemple deux moteurs sans balai) ou de types différents (par exemple un moteur avec balais et un moteur sans balai).

La pièce de jonction 5 comprend par exemple une portion cylindrique, dont l'axe est confondu avec l'axe de rotation Δa de l'actionneur rotatif 2a. La portion cylindrique 5a est tronquée en biseau d'un côté et normalement à son axe d'un autre côté. L'extrémité tronquée normalement à l'axe présente une section circulaire formant l'ouverture 50a qui reçoit le stator de l'actionneur rotatif 2a.

La pièce de jonction 5 comprend une seconde portion plane 5b, qui s'étend dans le prolongement de l'extrémité biseauté de la portion cylindrique 5a. Cette seconde portion plane 5b est orthogonale à l'axe de rotation Δb de l'autre actionneur rotatif 2b. Cette seconde portion plane 5b peut être parallèle à l'axe de la portion cylindrique tronquée 5a, auquel cas les axes de rotation Δa et Δb des actionneurs sont orthogonaux. Une découpe circulaire est ménagée dans la portion plane 5b pour former l'ouverture 50b qui reçoit le rotor de l'actionneur rotatif 2b.

Dans la pièce de jonction 5, les ouvertures circulaires recevant les rotors ou les stators sont par exemple aménagées avec leur axe central disposé respectivement dans deux directions transversales l'une par rapport à l'autre. Dans l'exemple illustré, les axes de rotation Δa et Δb des actionneurs rotatifs sont perpendiculaires (c'est-à-dire orthogonaux et coplanaires). Ils pourraient, en variante, n'être que séquents avec un angle quelconque (c'est-à-dire coplanaires sans être nécessairement perpendiculaires). Ces axes pourraient également être orthogonaux sans être coplanaires (et donc non séquents).

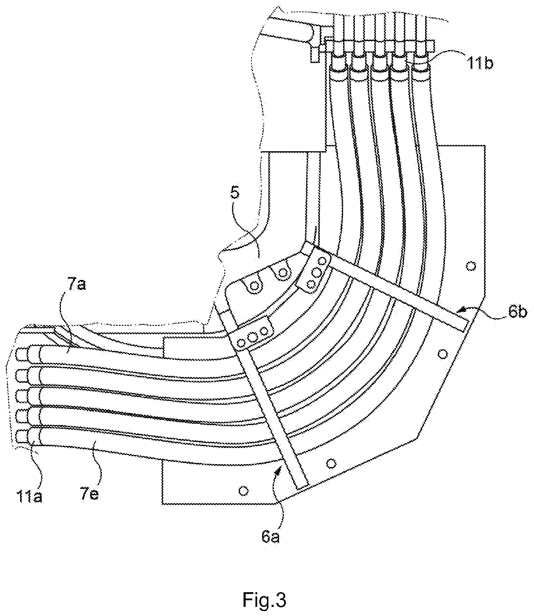

Selon l'invention, une ou plusieurs fourches de guidage sont par ailleurs associées à la pièce de jonction 5. La figure 1 illustre un mode de réalisation ne comportant qu'une fourche 6, tandis que les figures 2 et 3 représentent un mode de réalisation comportant deux fourches 6a, 6b. A l'exception du nombre de fourches utilisées, les principes énoncés restent les mêmes pour ces deux modes de réalisation. Pour des raisons de clarté, les câbles n'ont pas été représentés à la figure 1, tandis que les actionneurs et le moteur ionique n'ont pas été représentés aux figures 2 et 3.

Comme représenté à la figure 1, la fourche 6 peut comporter trois doigts 9a, 9b, 9c rectilignes, coplanaires et parallèles entre eux, portés par une branche de fixation 15 centrale.

La branche de fixation 15 présente une première extrémité qui est fixée sur la pièce de jonction 5. Ladite branche de fixation 15 est par exemple disposée selon un axe 17 (qui correspond à l'axe principal de la fourche) passant par le centre d'intersection 16 des axes de rotation Δa, Δb des actionneurs 2a et 2b. Les mouvements des câbles sont alors avantageusement minimisés de part et d'autre de cette fourche.

Les trois doigts 9a-9c sont reliés, par l'une de leur extrémité, à la seconde extrémité de la branche de fixation 15 par l'intermédiaire d'une branche transversale commune 18.

On pourrait, en variante, envisager une fourche à deux doigts ou une fourche à quatre doigts ou plus.

Les doigts de la fourche sont destinés à recevoir des câbles électriques d'alimentation et de contrôle du moteur ionique 1, généralement organisés sous forme de nappes. On choisit par exemple ici de maintenir une seule nappe dans chaque intervalle délimité par deux doigts consécutifs. La fourche à trois doigts 9a-9c permet alors le maintien de deux nappes de câbles ; une fourche à deux doigts permet le maintien d'une nappe de câbles, une fourche à N doigts permettant le maintien de N-1 nappes de câbles.

Les doigts sont par exemple rectilignes ; ils pourraient en variante être courbes. Qu'ils soient rectilignes ou courbes, les doigts d'une même fourche peuvent être parallèles entre eux, ou non.

La fourche peut présenter une forme générale plane s'étendant transversalement aux câbles, c'est-à-dire que les doigts 9a, 9b, 9c et la branche de fixation 15 sont coplanaires (comme dans les exemples illustrés) et que le plan de la fourche est traversé par les câbles. En variante, on peut avoir des doigts coplanaires portés par une branche de fixation qui est inclinée par rapport au plan des doigts, notamment pour des raisons de facilité de construction. De surcroît, les doigts d'une même fourche peuvent ne pas être coplanaires.

Les doigts peuvent être de section circulaire. Les doigts peuvent en variante être de section polygonale. Les doigts peuvent comprendre des portions planes de support des câbles. Les doigts n'ont pas nécessairement une section constante sur toute leur longueur.

Les câbles sont maintenus entre deux doigts consécutifs c'est-à-dire deux doigts en vis-à-vis.

Les câbles maintenus dans la fourche restent libres de se déplacer selon une direction transversale par rapport aux doigts, de part et d'autre de la fourche, et selon une direction longitudinale par rapport aux doigts.

Comme illustré (voir Fig. 2 et Fig. 3), les doigts 9a-9c s'étendent de préférence en saillie par rapport à la nappe de câbles, ce qui permet par exemple de maintenir les câbles lorsqu'ils se déplacent longitudinalement par rapport aux doigts. Les libertés de mouvement transversalement aux doigts, de part et d'autre de la fourche, permettent d'ajuster les longueurs entre les points de support des câbles.

On pourrait aussi envisager des câbles maintenus entre les doigts de la ou des fourches avec des degrés de liberté restreints. Le couple qu'exercent les câbles sur chaque actionneur rotatif 2a, 2b reste inférieur à la capacité de couple de l'actionneur en toute circonstance, la capacité de couple d'un actionneur étant le couple de réaction maximal que peut supporter l'actionneur en fonctionnement.

Le positionnement de la ou des fourches est réalisé de façon à imposer une ou plusieurs courbures aux câbles. L'augmentation du nombre de fourches augmente ainsi les courbures et les forces et les couples exercés par les câbles sur les actionneurs rotatifs, tout en restant dans des limites contrôlées et acceptables, c'est-à-dire tout en restant inférieurs à la capacité de couple de chacun des actionneurs rotatifs.

Le nombre de fourches sera choisi avantageusement pour optimiser l'aménagement spatial de la zone réservée au passage des câbles en fonction de la puissance disponible des actionneurs. La ou les fourches permettent une disposition des câbles dans une zone spatiale bornée et rendent ainsi le système d'orientation résistant aux vibrations ou aux efforts de poussée.

La figure 2 représente, selon une vue de côté, des nappes 8a et 8b de câbles électriques maintenus par deux fourches selon l'invention. Chaque fourche 6a ou 6b comprend trois doigts 9a-9c, 10a-10c respectivement, et reçoit deux nappes 8a et 8b superposées. Les câbles 7a, 7b, 7c, 7d et 7e dans une même nappe 8a sont disposés côte à côte. Les actionneurs ne sont pas représentés ; la pièce de jonction 5 entre les actionneurs, sur laquelle sont fixées les fourches de guidage 6a et 6b, apparaît très schématiquement et n'est visible qu'en partie sur la figure 3 ; on peut observer qu'elle ne présente pas nécessairement la même forme que la pièce de jonction du premier mode de réalisation de la figure 1.

Chaque câble 7a ou 7f est fixé à ses deux extrémités 11a et 11b ou 12a et 12b respectivement au bâti 4 et au dispositif électrique 1 à alimenter. Comme expliqué précédemment, les câbles référencés 7a, 7f, peuvent par exemple glisser par rapport aux doigts 9a-9c, 10a-10c des fourches 6a et 6b. Le câble pourra glisser par rapport à une fourche notamment lorsque le point de support du câble sur la fourche n'est pas disposé sur l'axe de la rotation résultant du mouvement des actionneurs. La longueur des doigts permet de maintenir le câble dans les fourches.

La maîtrise des positions des câbles et la maîtrise de leurs courbures, permet ainsi de maîtriser les couples qu'exercent ces câbles sur les actionneurs rotatifs du fait de leur raideur, et permet notamment un haut niveau de fiabilité et de robustesse du système. Ainsi les actionneurs en rotation sont sollicités dans leur plage de fonctionnement. De nombreux mouvements répétitifs peuvent dès lors être exécutés sans opérations de maintenance.

De plus quelles que soient les positions du ou des actionneurs, les câbles sont maintenus à l'intérieur d'un volume de guidage déterminé, les autres éléments constitutifs de l'engin spatial pouvant être aménagés en toute sécurité en dehors de ce volume de guidage.

La figure 3 représente, en vue de dessus, les nappes de câbles électriques maintenus par deux fourches selon l'agencement de la figure 2. Les doigts de chaque fourche sont parallèles entre eux et dépassent par rapport au câble externe 7e, 7f de chaque nappe, de façon à interdire aux câbles de sortir de leur chemin de guidage, en cas de mouvement des câbles par rapport aux doigts.

Les fourches 6a et 6b sont par exemple régulièrement réparties de façon à avoir des longueurs de câbles identiques entre deux points de support. On entend par « point de support » d'un câble un point de fixation du câble, par exemple à une de ses extrémités, ou un point de contact du câble avec une fourche. La longueur moyenne entre deux points de support consécutifs d'un câble est, de préférence, sensiblement la même le long dudit câble. Bien entendu, cette longueur peut varier en fonction des positions angulaires des actionneurs rotatifs (d'où la notion de longueur moyenne). La longueur entre deux points de support consécutifs varie aussi d'un câble à un autre, selon leur position dans une même nappe ou d'une nappe à une autre. Par exemple, la longueur moyenne entre deux points de support du câble interne 7a de la nappe est inférieure à la longueur du câble externe 7e de la nappe et les variations en position du câble externe peuvent être plus importantes.

L'aménagement des fourches pourra être optimisé de nombreuses façons différentes notamment en fonction des contraintes de chaque mission. Le système d'orientation selon l'invention est ainsi particulièrement adaptable à différentes missions spatiales, pour l'orientation d'un ou plusieurs moteurs ioniques ou d'autres dispositifs électriques à alimenter.

## Revendications

1. Engin spatial (100) comprenant
- un bâti (4),
- un dispositif électrique (1),
- des câbles électriques (7a-7f) pour l'alimentation et/ou le contrôle dudit dispositif électrique,
- au moins deux actionneurs rotatifs (2a, 2b) pour l'orientation du dispositif électrique (1) autour de deux axes de rotation (Δa, Δb) non parallèles,
- une pièce de jonction (5) entre les deux actionneurs rotatifs, l'un des actionneurs rotatifs (2a) étant relié d'une part au dispositif électrique (1) et d'autre part à la pièce de jonction (5), l'autre actionneur rotatif (2b) étant relié d'une part à la pièce de jonction (5) et d'autre part au bâti (4), et
- une ou plusieurs fourches de guidage (6, 6a, 6b), agencées à l'extérieur de la pièce de jonction, chacune desdites fourches de guidage étant fixée à la pièce de jonction (5) et comprenant des doigts (9a, 9b, 9c ; 10a, 10b, 10c) configurés pour supporter les câbles électriques (7a-7f) et délimiter entre les doigts un chemin de guidage pour lesdits câbles électriques (7a-7f),
où
chaque fourche de guidage (6, 6a, 6b) est disposée de façon à ce que, quelles que soient les positions des actionneurs rotatifs (2a, 2b), les câbles électriques (7a-7f) exercent, sur chacun des actionneurs rotatifs (2a, 2b), un couple qui est inférieur à une capacité de couple de l'actionneur rotatif,
et où
les axes de rotation (Δa, Δb) des actionneurs rotatifs (2a, 2b) sont séquents en un centre d'intersection (16) et au moins l'une des fourches de guidage (6a, 6b, 6c) présente un axe principal qui passe par ledit centre d'intersection (16).

2. Engin spatial selon la revendication 1, dans lequel la ou les fourches de guidage (6, 6a, 6b) comprennent chacune une branche de fixation (15) fixée à la pièce de jonction par une première extrémité, les doigts (9a, 9b, 9c ; 10a, 10b, 10c) se présentant sous la forme de tiges solidarisées, via une de leurs extrémités, à la seconde extrémité de la branche de fixation (15).

3. Engin spatial selon la revendication 1, dans lequel les câbles électriques (7a - 7f) sont libres de glisser par rapport aux doigts (9a, 9b, 9c ; 10a, 10b, 10c) de chaque fourche de guidage (6, 6a, 6b).

4. Engin spatial selon l'une des revendications 1 ou 2, dans lequel, pour chaque fourche de guidage (6, 6a, 6b), les doigts (9a, 9b, 9c ; 10a, 10b, 10c) de ladite fourche de guidage sont rectilignes et parallèles entre eux.

5. Engin spatial selon l'une des revendications 1 à 3, dans lequel, pour chaque fourche de guidage (6, 6a, 6b), les doigts (9a, 9b, 9c ; 10a, 10b, 10c) de ladite fourche de guidage dépassent par rapport aux câbles (7a - 7f) de façon à interdire auxdits câbles de sortir de leur chemin de guidage.

6. Engin spatial selon l'une des revendications 1 à 5, dans lequel au moins l'une des fourches de guidage (6a, 6b) comprend trois doigts délimitant deux intervalles pour recevoir au moins deux nappes (8a, 8b) superposées de câbles électriques (7a-7f), les câbles dans chacune des nappes (8a, 8b) étant disposés côte à côte.

7. Engin spatial selon l'une des revendications 1 à 6, dans lequel les fourches de guidage (6a, 6b) sont régulièrement réparties le long d'une direction axiale des câbles de façon à avoir, pour chaque câble, des tronçons de câble sensiblement de même longueur entre deux points de support.

8. Engin spatial selon l'une des revendications 1 à 7, dans lequel chaque actionneur rotatif comprend un rotor et un stator et la pièce de jonction (5) est fixée d'une part au stator de l'actionneur (2a) qui est relié au dispositif électrique (1) et d'autre part au rotor de l'actionneur rotatif (2b) qui est relié au bâti (4) de l'engin spatial.

9. Engin spatial (100) selon l'une des revendications 1 à 8, dans lequel le dispositif électrique (1) est un moteur ionique.

## Patentansprüche

1. Raumfahrzeug (100), das Folgendes umfasst:
- einen Rahmen (4),
- eine elektrische Vorrichtung (1),
- Elektrokabel (7a-7f) zur Stromversorgung und/oder Steuerung der elektrischen Vorrichtung,
- mindestens zwei Drehantriebe (2a, 2b) zur Ausrichtung der elektrischen Vorrichtung (1) um zwei nicht parallele Drehachsen (Δa, Δb) herum,
- ein Verbindungsbauteil (5) zwischen den beiden Drehantrieben, wobei einer der Drehantriebe (2a) einerseits mit der elektrischen Vorrichtung (1) und andererseits mit dem Verbindungsbauteil (5) verbunden ist, wobei der andere Drehantrieb (2b) einerseits mit dem Verbindungsbauteil (5) und andererseits mit dem Rahmen (4) verbunden ist, und
- eine oder mehrere Lenkgabeln (6, 6a, 6b), die außerhalb des Verbindungsbauteils angeordnet sind, wobei jede der Lenkgabeln am Verbindungsbauteil (5) befestigt ist und Finger (9a, 9b, 9c; 10a, 10b, 10c) umfasst, die dazu konfiguriert sind, die Elektrokabel (7a-7f) zu tragen und zwischen den Fingern einen Führungspfad für die Elektrokabel (7a-7f) zu begrenzen,
wobei jede Lenkgabel (6, 6a, 6b) derart angeordnet ist, dass, unabhängig von den Positionen der Drehantriebe (2a, 2b), die Elektrokabel (7a-7f) auf jeden der Drehantriebe (2a, 2b) ein Drehmoment ausüben, das geringer als eine Drehmomentkapazität des Drehantriebs ist,
und wobei sich die Drehachsen (Δa, Δb) der Drehantriebe (2a, 2b) in einem Schnittpunkt (16) schneiden und mindestens eine der Lenkgabeln (6a, 6b, 6c) eine Hauptachse aufweist, die durch den Schnittpunkt (16) verläuft.

2. Raumfahrzeug nach Anspruch 1, wobei die Lenkgabel(n) (6, 6a, 6b) jeweils einen Befestigungsschenkel (15) umfassen, der an einem ersten Ende am Verbindungsbauteil befestigt ist, wobei die Finger (9a, 9b, 9c; 10a, 10b, 10c) in der Form von Stangen vorliegen, die über eines ihrer Enden mit dem zweiten Ende des Befestigungsschenkel (15) fest verbunden sind.

3. Raumfahrzeug nach Anspruch 1, wobei die Elektrokabel (7a-7f) im Verhältnis zu den Fingern (9a, 9b, 9c; 10a, 10b, 10c) jeder Lenkgabel (6, 6a, 6b) frei gleitend sind.

4. Raumfahrzeug nach einem der Ansprüche 1 oder 2, wobei für jede Lenkgabel (6, 6a, 6b) die Finger (9a, 9b, 9c; 10a, 10b, 10c) der Lenkgabel geradlinig und parallel zueinander sind.

5. Raumfahrzeug nach einem der Ansprüche 1 bis 3, wobei für jede Lenkgabel (6, 6a, 6b) die Finger (9a, 9b, 9c; 10a, 10b, 10c) der Lenkgabel in Bezug auf die Kabel (7a-7f) hervorstehen, um zu verhindern, dass die Kabel ihren Führungspfad verlassen.

6. Raumfahrzeug nach einem der Ansprüche 1 bis 5, wobei mindestens eine der Lenkgabeln (6a, 6b) drei Finger, die zwei Abstände begrenzen, umfasst, um mindestens zwei übereinanderliegende Matten (8a, 8b) aus Elektrokabeln (7a-7f) aufzunehmen, wobei die Kabel in jeder der Matten (8a, 8b) Seite an Seite angeordnet sind.

7. Raumfahrzeug nach einem der Ansprüche 1 bis 6, wobei die Lenkgabeln (6a, 6b) gleichmäßig entlang einer axialen Richtung der Kabel verteilt sind, um für jedes Kabel Kabelabschnitte mit im Wesentlichen gleicher Länge zwischen zwei Trägerpunkten zu haben.

8. Raumfahrzeug nach einem der Ansprüche 1 bis 7, wobei jeder Drehantrieb einen Rotor und einen Stator umfasst und das Verbindungsbauteil (5) einerseits am Stator des Antriebs (2a), der mit der elektrischen Vorrichtung (1) verbunden ist, und andererseits am Rotor des Drehantriebs (2b) befestigt ist, der mit dem Rahmen (4) des Raumfahrzeugs verbunden ist.

9. Raumfahrzeug (100) nach einem der Ansprüche 1 bis 8, wobei die elektrische Vorrichtung (1) ein Ionentriebwerk ist.

## Claims

1. A spacecraft (100) comprising
- a frame (4),
- an electrical device (1),
- electrical cables (7a-7f) for powering and/or controlling said electrical device,
- at least two rotary actuators (2a, 2b) for orienting the electrical device (1) about two non-parallel axes of rotation (Δa, Δb),
- a junction member (5) between the two rotary actuators, one of the rotary actuators (2a) being connected on the one hand to the electrical device (1) and on the other hand to the junction member (5), the other rotary actuator (2b) being connected on the one hand to the junction member (5) and on the other hand to the frame (4), and
- one or more guide forks (6, 6a, 6b), arranged outside the junction member, each of said guide forks being fastened to the junction member (5) and comprising fingers (9a, 9b, 9c; 10a, 10b, 10c) configured to support the electrical cables (7a-7f) and delimit between the fingers a guide path for said electrical cables (7a-7f),
wherein each guide fork (6, 6a, 6b) is arranged so that, irrespective of the positions of the rotary actuators (2a, 2b), the electrical cables (7a-7f) exert, on each of the rotary actuators (2a, 2b), a torque that is lower than a torque capacity of the rotary actuator,
wherein the axes of rotation (Δa, Δb) of the rotary actuators (2a, 2b) are secant at an intersection center (16) and at least one of the guide forks (6, 6a, 6b) has a main axis that passes through said intersection center (16).

2. The spacecraft according to claim 1, wherein each of the guide fork(s) (6, 6a, 6b) comprises a fastening branch (15) fastened to the junction member by a first end, the fingers (9a, 9b, 9c; 10a, 10b, 10c) being in the form of rods secured, via one of their ends, to the second end of the fastening branch (15).

3. The spacecraft according to claim 1, wherein the electrical cables (7a-7f) are free to slide relative to the fingers (9a, 9b, 9c; 10a, 10b, 10c) of each guide fork (6, 6a, 6b).

4. The spacecraft according to one of claims 1 or 2, wherein, for each guide fork (6, 6a, 6b), the fingers (9a, 9b, 9c; 10a, 10b, 10c) of said guide fork are rectilinear and parallel to each other.

5. The spacecraft according to one of claims 1 to 3, wherein, for each guide fork (6, 6a, 6b), the fingers (9a, 9b, 9c; 10a, 10b, 10c) of said guide fork protrude with respect to the cables (7a-7f) so as to prevent said cables from getting out of their guide path.

6. The spacecraft according to one of claims 1 to 5, wherein at least one of the guide forks (6a, 6b) comprises three fingers delimiting two intervals for receiving at least two superposed plies (8a, 8b) of electrical cables (7a-7f), the cables in each of the plies (8a, 8b) being arranged side-by-side.

7. The spacecraft according to one of claims 1 to 6, wherein the guide forks (6a, 6b) are evenly distributed along an axial direction of the cables so as to have, for each cable, cable sections having substantially the same length between two support points.

8. The spacecraft according to one of claims 1 to 7, wherein each rotary actuator comprises a rotor and a stator and wherein the junction member (5) is fastened on the one hand to the stator of the actuator (2a) which is connected to the electrical device (1) and on the other hand to the rotor of the rotary actuator (2b) which is connected to the frame (4) of the spacecraft.

9. The spacecraft (100) according to one of claims 1 to 8, wherein the electrical device (1) is an ion engine.
